# EUROPÄISCHE PATENTSCHRIFT

(11) **EP 2 801 085 B1**
(45) Veröffentlichungstag und Bekanntmachung des Hinweises auf die Patenterteilung: **19.04.2017**
(21) Anmeldenummer: 12805953.2
(22) Anmeldetag: 26.11.2012
(51) Int. Cl.: G08C 19/02, G08C 19/12, B60R 16/03, G01S 7/526, G01S 15/93

(54) **VORRICHTUNG ZUR ERFASSUNG VON ANALOGEN SIGNALEN SOWIE VERFAHREN ZUM BETREIBEN DER VORRICHTUNG**
DEVICE FOR DETECTING ANALOG SIGNALS, AND METHOD FOR OPERATING THE DEVICE
DISPOSITIF DE DÉTECTION DE SIGNAUX ANALOGIQUES ET PROCÉDÉ PERMETTANT DE FAIRE FONCTIONNER LEDIT DISPOSITIF

(30) Priorität: 02.01.2012 DE 102012200017
(43) Veröffentlichungstag der Anmeldung: 12.11.2014
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2012/073584
(87) Internationale Veröffentlichungsnummer: WO 2013/102516

(56) Entgegenhaltungen:
- EP-A1- 1 882 613
- EP-A2- 0 406 718
- DE-A1- 3 519 709
- DE-A1- 10 340 431
- DE-B3-102005 014 133
- US-A- 5 793 754
- US-B1- 6 239 732

## Beschreibung

Die Erfindung betrifft eine Vorrichtung zur Erfassung von analogen Signalen, insbesondere zur Durchführung einer Umfelderfassung, die eine Steuer- und Signalauswerteeinheit, zumindest einen Sensor mit einer Signalaufnahmeeinheit zur Erfassung von Empfangssignalen sowie mit einem Verstärker zur Verstärkung der Empfangssignale aufweist, wobei der Sensor über eine oder mehrere Übertragungsleitungen mit der Steuer- und Signalauswerteeinheit verbunden ist. Ferner betrifft die Erfindung ein Verfahren zum Betreiben der erfindungsgemäßen Vorrichtung sowie ein Bewegungshilfsmittel, welches die erfindungsgemäße Vorrichtung aufweist.

### Stand der Technik

Zur akustischen Umfelderfassung von Fahrzeugen werden derzeit üblicherweise Systeme im Ultraschallbereich verwendet, bevorzugt pulsweise messende. Dabei werden typischerweise alle 10 ms bis 300 ms über einen Elektro-Akustik-Wandler akustische Pulse bei ca. 50 kHz ausgesandt. Aus der Pulslaufzeit zu dem sendenden und zu den nichtsendenden Wandlern wird auf den Objektabstand im Raum geschlussfolgert.

Sensoren zur akustischen Umfeldüberwachung müssen aufgrund ihrer Funktionsweise mit dem Medium Luft auf der Außenhaut des Fahrzeugs in Verbindung stehen. Dazu werden sie entweder auf der Fahrzeugaußenhaut oder aber verdeckt in der Nähe der Fahrzeugaußenhaut verbaut. Diese Anforderung führt oft zu Konflikten mit den Designvorstellungen der Fahrzeugdesigner. Daher wird üblicherweise eine Split-Technologie angewandt, bei der die Komponenten nur zum Teil in oder an der Fahrzeugaußenhaut untergebracht sind oder aber die Anzahl und/oder die Größe der Komponenten reduziert werden. So können die Akustik-Elektro-Wandler in/an der Fahrzeugaußenhaut untergebracht werden, wobei die Steuer- und Verarbeitungseinheit(en) mehrere solcher baulich/räumlich abgesetzten Sensoren ansteuert und deren Empfangssignale verarbeitet.

Wahlweise können die Sensoren akustische Signale nur senden oder nur empfangen oder es sind beide Eigenschaften ein einem Sensor kombiniert. Verschiedene Konzepte dafür sind in DE102008044351A1 vorgeschlagen.

Ferner kann eine einfache Strategie darin liegen, die Sensoren als passive Bauelemente auszugestalten, sodass sie jeweils mit einer Zweidrahtleitung an die Steuer- und Verarbeitungseinheit angeschlossen werden können. Passive Architekturen sind jedoch mit erhöhten Risiken bezüglich Einstrahlung und Abstrahlung elektromagnetischer Wellen verbunden, sodass die abgebbare akustische Schallleistung gegenüber Konzepten, die mit Energiespeicher und Endstufe in der abgesetzten Einheit arbeiten, im Allgemeinen geringer sein wird.

Aktive Sensoren benötigen dahingegen neben der Energieübertragung auch Möglichkeiten zur Übertragung von Informationen über die vom Sensor auszusende Signalform und der empfangenen Echos.

Motivation für die Übertragung der Signalform zu dem abgesetzten Sensor kann sein, dass dieser zur Kosteneinsparung keinen Signalformspeicher hat, oder aber situationsabhängig unterschiedlichste Signalformen ausgesandt werden müssen, a) weil das Messverfahren das erfordert oder zur Individualisierung der Aussendungen von Sensoren und/oder b) weil eine Nachjustage technischer Parameter z.B. infolge von Alterung notwendig ist.

Es gibt einfache Systeme mit abgesetzten, aktiv arbeitenden Ultraschallsensoren am Markt, die zwar über eine kabelsparende Zweidrahtleitung angeschlossen sind, bei denen jedoch zur Übertragung der auszusendenden Signalformen die Spannung an der Zweidrahtversorgungsleitung binär ein- und aus geschaltet wird, womit die Spannung auf der Zweidrahtleitung daher nur zwei Zustände hat. Damit verbunden ist, dass ausgerechnet während des Sendens bedingt durch das Ein- und Ausschalten nur etwa die Hälfte der Zeit Strom zum abgesetzten Sensor fließen kann.

Andererseits sind viele aktive, akustisch sendende abgesetzte Sensoren mit mehr als zwei Leitungen an der Steuer- und Verarbeitungseinheit angeschlossen. Beispielsweise werden zwei Leitungen für die Energieversorgung, eine dritte Leitung zur Übertragung der Signalform zum abgesetzten Sensor, und eine vierte Leitung zur Übertragung der Empfangssignale vom abgesetzten Sensor zur Steuer- und Verarbeitungseinheit hin verwendet. Ein solcher Sensor ist beispielsweise in http://www.noliac.com/Ultrasonic_transducers-8149.aspx gezeigt.

In WO 2010/076061 A1 wird eine Architektur mit abgesetzten Sensoren beschrieben, bei denen der Verstärkungsfaktor, gemäß dem das von einem Sensor empfangene Echosignal verstärkt wird, variabel eingestellt werden kann, in Abhängigkeit von der jeweiligen gemessenen Laufzeit des Echosignals. Damit kann der aus der Echolaufzeit resultierende Verlust der Echostärke kompensiert werden. Solche Systeme eignen sich besonders für die Erfassung eines Umfelds, bei der mehrere abgesetzte Sensoren verwendet werden, die beispielsweise an unterschiedlichen Stellen der Karosserie eines Kraftfahrzeuges angebracht sind.

Die Prinzipien der laufzeitabhängigen Verstärkung sind nicht nur auf Ultraschallsysteme anwendbar, sondern je nach Anwendung auch auf andere Technologien, beispielsweise welche die mit elektromagnetischen Wellen arbeiten. So wird WO 02/16958 A2 ein Sensorsystem beschrieben, das sowohl bei Ultraschallortung als auch bei Radarortung anwendbar ist.

In DE 35 19 709 A1 wird eine zeitgleiche bidirektionale Übertragung von Digitaldaten und/oder Analogdaten über eine Zweitdrahtleitung beschrieben.

Ferner wird in DE 10 2005 014 133 B3 eine bidirektionale Signalübertragung über eine einzige Übertragungsleitung beschrieben.

Dabei werden über diese einzige Übertragungsleitung digitale Kontrollsignale, die beispielsweise zur Verstärkungseinstellung verwendet werden, und analoge Sensorsignale übertragen.

Weiterhin wird in US 5 793 754 A eine bidirektionale Signalübertragung über einen Zweitdraht-Bus beschrieben, wobei die Datenübertragung mittels analoger Puls-Dauer-Modulation erfolgt.

Des Weiteren wird in EP 1 882 613 eine bidirektionale Signalübertragung über einen Fahrzeug-Zweitdraht-Bus beschrieben, wobei die Datenübertragung kodiert und frequenzmoduliert erfolgt.

### Aufgabe

Es soll eine Lösung für eine Architektur mit zumindest einem aktiv arbeitenden abgesetzten Sensor bereitgestellt werden, die möglichst kabelsparend implementiert werden kann, d.h. beispielsweise nur über eine Zweidrahtleitung angeschlossene Sensoren aufweist, wobei die mittels eines Verstärkers verstärkte Empfangsinformation von zumindest einem abgesetzten Sensor möglichst störungsarm zur Signalverarbeitungseinheit übertragbar sein sollen.

### Offenbarung der Erfindung

Es wird eine Vorrichtung zur Erfassung von analogen Signalen zur Durchführung einer Umfelderfassung, geschaffen, die zumindest eine Steuer- und Signalauswerteeinheit und zumindest einen Sensor mit einer Signalaufnahmeeinheit zur Erfassung von Empfangssignalen aufweist. Der Sensor ist über eine oder mehrere Übertragungsleitungen mit der Steuer- und Signalauswerteeinheit verbunden und die Übertragungsleitung oder eine der Übertragungsleitungen ist zum zeitgleichen bidirektionalen Übertragung von Signalen ausgebildet. Die erfindungsgemäße Vorrichtung weist ferner einen in seiner Verstärkung veränderbaren Verstärker zur Verstärkung der Empfangssignale auf und ist dazu ausgebildet, eine Übertragung der mittels des Verstärkers verstärkten Empfangssignale über die gleiche Übertragungsleitung durchzuführen, über die zeitgleich dazu auch eine Information zur Einstellung der Verstärkung übertragen wird. Zur Übertragung der mittels des Verstärkers verstärkten Empfangssignale weist dabei der Sensor einen mit dem Verstärker gekoppelten ersten Hochpassfilter und eine Addierstelle und die Steuer- und Signalauswerteeinheit einen mit einer Signalauswertung der Steuer- und Signalauswerteeinheit gekoppelten zweiten Hochpassfilter auf. Zur Übertragung der Information zur Einstellung der Verstärkung weist die Steuer- und Signalauswerteeinheit einen mit einer Verstärkungssteuerung der Steuer- und Signalauswerteeinheit gekoppelten ersten Tiefpassfilter und eine Addierstelle und der Sensor einen mit einem Eingang des Verstärkers gekoppelten zweiten Tiefpassfilter auf.

Ferner wird ein dazugehöriges vorteilhaftes Verfahren zum Betreiben der erfindungsgemäßen Vorrichtung offenbart, bei dem die vom Verstärker verstärkten Signale mittels Hochpassfilter und Addierstelle im Sensor auf die Übertragungsleitung eingeprägt werden und in der Steuer- und Signalauswerteeinheit mittels Hochpassfilter ausgekoppelt werden und die Information zur Verstärkungseinstellung in der Steuer- und Signalauswerteeinheit mittels Tiefpassfilter und Addierstelle in die Übertragungsleitung eingeprägt und in dem zumindest einen Sensor über Tiefpassfilter ausgekoppelt wird.

Vorzugsweise ist die erfindungsgemäße Vorrichtung dazu ausgebildet, auch eine Übertragung der Versorgungsspannung des Sensors über die gleiche Übertragungsleitung durchzuführen, über die zeitgleich die mittels des Verstärkers verstärkten Empfangssignale und die Information zur Einstellung der Verstärkung übertragen wird.

Somit kann erfindungsgemäß vorteilhaft eine zugleich kabelsparende als auch störungsarme Übertragung zwischen einem abgesetzten Sensor bzw. Sensorkopf und einer zugehörigen Steuer- und Signalauswerteeinheit durchgeführt werden. Und zwar wird dies insbesondere durch die erfindungsgemäße Kombination eines Verstärkers mit einstellbarer Verstärkung, der im Sensor angeordnet ist, und die zeitgleiche Verwendbarkeit einer Übertragungsleitung für sowohl die Übertragung der mit veränderbarer Verstärkung verstärkten Empfangssignale als auch die Übertragung der Versorgungsspannung und/oder der Information zum Einstellen der Verstärkung des Verstärkers. Dadurch, dass der Verstärker die Empfangssignale mit veränderbarer Verstärkung verstärken kann, ist das System besonders robust gegen Rauschsignaleinkopplungen auf einem analogen Datenbus, da die Amplitude der Übertragungssignale an die Steuer- und Signalauswerteeinheit weitgehend auf einem bestimmten Niveau bzw. innerhalb einer bestimmten Größenordnung gehalten werden kann, beispielsweise indem schwache Empfangssignale stärker verstärkt werden und starke schwächer verstärkt werden. Für den analogen Datenbus wird die Versorgungsleitung verwendet, und/oder es wird vorteilhaft ein bidirektionaler Bus, bevorzugt ein analoger Bus, eingesetzt, der sowohl die Empfangssignale als auch die Verstärkereinstellungssignale auf ein und derselben Leitung überträgt. Vorteilhaft ist ferner, dass eine Steuerung und Auslese mit schnellen Reaktionszeiten und einer entsprechenden Reduzierung von Störfaktoren durchgeführt werden kann, was insbesondere durch die erfindungsgemäß gleichzeitig durchführbaren Übertragungen ermöglicht wird.
Ferner ändert sich bei der vorliegenden Erfindung die Verstärkungsinformation so langsam, dass sie durch Filterung, d.h. Hochpass und Tiefpass leicht vom Empfangssignal getrennt werden kann. So kann die Steuer- und Signalverarbeitungseinheit vorteilhaft auf besonders einfache Weise über die Übertragungsleitungen die einstellbare Verstärkung einstellen.

Bevorzugte Ausführungsformen und Weiterbildungen der Erfindung ergeben sich aus den Unteransprüchen und der nachfolgenden Beschreibung.

Bevorzugt sollte der Sensor via Zweidrahtleitung angeschlossen sein, über die sowohl elektrischer Energie als auch die Verstärkungseinstellinformationen als auch die im abgesetzten Sensor mittels einstellbarem Verstärker verstärkten Echoinformationen übertragen werden. Jedoch kann, obgleich die Erfindung bevorzugt bei mit Zweidrahtleitung angeschlossenen Sensorköpfen anwendbar ist, die Erfindung auch vorteilhaft bei System angewandt werden, bei denen neben dem bidirektionalen analogen eine separate Versorgungsleitung verwendet wird.

Eine andere besonders vorteilhafte Weiterbildung der Erfindung ergibt sich weiterhin, indem die Einstellung der Verstärkung derart gesteuert wird, dass die Empfangssignale von der Laufzeit eines Echosignals abhängig verstärkt werden, wodurch die Vorrichtung aufgrund der geringen notwendigen Amplitudenauflösung des Systems besonders robust gegen Störungen ist.

Bevorzugt weist die Steuer und Signalauswerteeinheit neben der Verstärkungssteuerung und der Signalauswertung Regelungsmittel zur Ansteuerung der Verstärkungssteuerung in Antwort auf Ausgangssignale der Signalauswertung auf.

Gemäß einer Ausführungsform der Erfindung weist der Sensor eine steuerbare Stromquelle auf, mittels der das mit variabler Verstärkung durch den Verstärker verstärkte Empfangssignal als Stromsignal in die Übertragungsleitung eingekoppelt werden kann. Alternativ oder zusätzlich kann der Sensors auch eine steuerbare Spannungsquelle aufweisen, mittels der das mit variabler Verstärkung durch den Verstärker verstärke Empfangssignal als Spannungssignal in die Übertragungsleitung eingekoppelt werden kann.

Gemäß noch einer anderen Ausführungsform weist die Steuer- und Signalauswerteeinheit eine steuerbare Stromquelle auf, mittels der das Signal zur Steuerung der einstellbaren Verstärkung im Sensor als Stromsignal in die Übertragungsleitung eingekoppelt werden kann. Alternativ oder zusätzlich kann der Sensor eine steuerbare Spannungsquelle aufweisen, mittels der das Signal zur Steuerung der einstellbaren Verstärkung im Sensor als Spannungssignal in die Übertragungsleitung eingekoppelt werden kann.

Gemäß einer vorteilhaften Weiterbildung der Erfindung wird das von der Steuer- und Signalauswerteeinheit in die Übertragungsleitung eingekoppelte Signal zur Steuerung der einstellbaren Verstärkung mittels auf den Sensor und Steuer- und Signalauswerteeinheit verteilter Glieder generiert.

Dabei weisen die auf den und Steuer und Signalauswerteeinheit verteilten Glieder bevorzugt beispielsweise einen einstellbaren Widerstand und/oder eine steuerbare Spannungsquelle, die in der Steuer- und Signalauswerteeinheit angeordnet sind, sowie einen Kondensator, der im Sensor angeordnet ist, auf, so dass die Vorrichtung vorteilhaft ausgebildet ist, das Signal zur Steuerung der einstellbaren Verstärkung durch Wahl des Widerstandswertes bzw. dessen Zeitverlaufs R(t) und/oder durch Vorgabe einer Spannung bzw. eines Spannungsverlaufs U(t) in der Steuer- und Signalauswerteeinheit sowie durch den im Sensor angeordneten Kondensator zu generieren.

Insbesondere bei dieser Ausführungsform wird deutlich, wie einfach ein Sensor durch die beschriebenen erfindungsgemäßen Mittel wird. Erfindungsgemäß bleibt die im Analogsignal enthaltene Information bis auf die meist ungewollte, und bereits im Sensor durch laufzeitabhängige Verstärkung entfernte laufzeitabhängige Dämpfung erhalten.

Die Erfindung kann insbesondere vorteilhaft in Kombination mit Verfahren zur Signalformübertragung an abgesetzte Sensoren betrieben werden, beispielswese bei einer Übertragung von variablen Signalformen, wie sie bei einem Auto-Replay-Protokoll auftreten können.

Jedoch kann nach einer Ausführungsform der Sensor auch einen Speicher zum Speichern des Zeitverlaufs der einstellbaren Verstärkung aufweisen. Bei dieser Ausführungsform kann die Vorrichtung derart betrieben werden, dass Steuerpulse über die Übertragungsleitung an den Sensor übertragen werden zum Starten eines Ablaufs der einstellbaren Verstärkung gemäß dem im Sensor gespeicherten Zeitverlauf.

Bevorzugt kann bei dem erfindungsgemäßen Verfahren die einstellbare Verstärkung sprunghaft verändert werden, beispielsweise gemäß V = 1/32; 1; 32; 256; usw.

Nach einer Weiterbildung der Erfindung wird im Sensor eine Amplitudendigitalisierung und/oder Frequenzanalyse und/oder Periodenanalyse durchgeführt, und die sich daraus ergebenden Daten werden auf eine quasianaloge Weise über einen die Verbindungsleitung aufweisenden bidirektionalen analogen Kanal zur Steuer- und Signalauswerteeinheit übertragen.

Insgesamt ist das erfindungsgemäße Konzept bei vielen Arten von Sensortechnologien anwendbar, wie beispielsweise einer Umfelderfassung mittels Ultraschall.

So weist bei einer anderen Weiterbildung der Erfindung die Vorrichtung eine oder mehrere der erfindungsgemäßen Signal- und Steuerungseinheiten auf, die jeweils mit mehreren der erfindungsgemäßen Sensoren verbunden sind, wobei die Sensoren Mittel zur Durchführung einer quasianalogen Übertragung der in dem Sensor detektierten Empfangssignale an die Signal- und Steuerungseinheit aufweisen. Diese Weitebildung eignet sich besonders vorteilhaft beispielsweise in Kombination mit einer Echosignal-Laufzeit-abhängigen Verstärkung.

Durch die sternförmige Anbindung abgesetzter Sensoren an die Steuer- und Signalverarbeitungseinheit, beispielsweise bei Anwendung der Erfindung in einem Fahrzeug, spielen vorteilhaft bei der hier realisierten Gleichspannungsübertragung Potentialdifferenzen, die sonst übliche sind, keine Rolle. Die Sensoren sind elektrisch isoliert zum Chassis des Fahrzeugs.

Die Erfindung ist nicht auf Ultraschallwandler beschränkt, sondern kann auch mit Sensorsystemen die beispielsweise mittels akustischen, hörbaren Schall arbeiten, eingesetzt werden. Dabei kann die Erfindung unter anderem bei Echo-Puls-Erfassungssystemen vorteilhaft eingesetzt werden. Aber beispielsweise auch im Bereich der Mikrophone mit einstellbarer Verstärkung, auch solche zur Musikaufzeichnung, kann die Erfindung eingesetzt werden. Die Erfindung ist auch nicht auf den Bereich der Akustik eingeschränkt. So kann der erfindungsgemäße Sensor auch ein Radar sein, oder mittels eines optischen Mediums arbeiten, indem zum Beispiel eine übertragene Signalform eine Helligkeitsmodulation des ausgesandten Lichts bewirkt und/oder Modulationen der Wellenlänge von auszusendendem Licht.

### Zeichnungen

Ausführungsformen der Erfindung werden anhand der Zeichnungen und der nachfolgenden Beschreibung näher erläutert. Es zeigen:
- Figur 1: ein Blockschaltbild einer Schaltungsarchitektur mit einem abgesetzten Sensor und einer Steuer- und Signalauswertungseinheit, die über eine Übertragungsleitung miteinander verbunden sind, gemäß einer ersten Ausführungsform der Erfindung,
- Figur 2: ein Blockschaltbild einer Schaltungsarchitektur mit einem abgesetzten Sensor und einer Steuer- und Signalauswertungseinheit, die über eine Übertragungsleitung miteinander verbunden sind, gemäß einer zweiten Ausführungsform der Erfindung, und
- Figur 3: eine Schaltungsskizze für eine Schaltung, bei der die Information zur Einstellung der Verstärkung als niederfrequente Spannungssignale und die Empfangssignale eines abgesetzten Sensors als hochfrequente Stromsignale über eine Übertragungsleitung übertragen werden, gemäß einer dritten Ausführungsform der Erfindung.

### Ausführungsformen der Erfindung

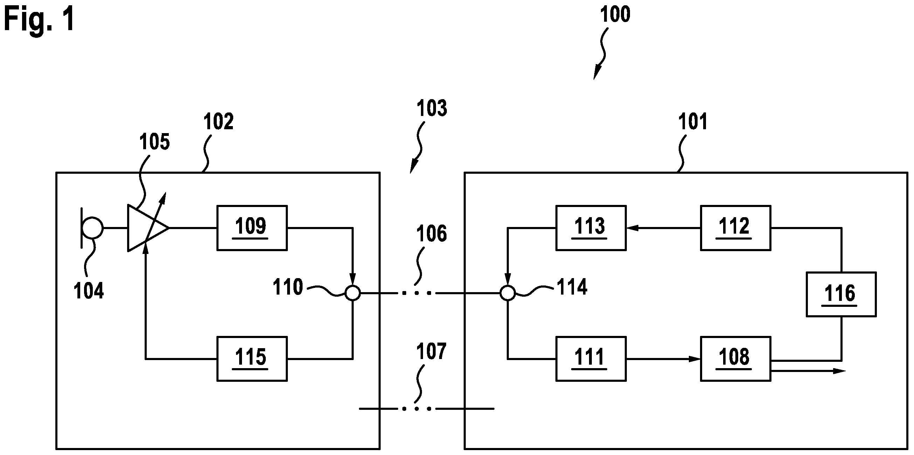

In der nachfolgenden ausführlichen Beschreibung haben gleiche oder ähnliche Komponenten die gleichen Bezugszeichen. Anhand von Figur 1 wird im Folgenden das der Erfindung zugrunde liegende Grundprinzip erklärt. Gemäß dem in Figur 1 gezeigten Blockschaltbild weist eine Schaltungsarchitektur 100 einen Sensor 102 sowie eine Steuer- und Signalverarbeitungseinheit 101 auf. Der Sensor 102 ist als abgesetzter Sensor ausgeführt, so dass zur Umfelderfassung nötige Komponenten teilweise in die Steuer- und Signalaufnahmeeinheit 101 ausgelagert sind. Der Sensor 102 weist eine Signalaufnahmeeinheit 104 auf. Dabei ist gemäß einer Variante der in Figur 1 gezeigten Ausführungsform der Sensor 102 zur Erfassung von Ultraschall eingerichtet, wobei die Signalaufnahmeeinheit 104 eine Piezomembran aufweist. Die von der Signalaufnahmeeinheit 104 empfangenen Empfangssignale werden mittels einem in dem Sensor 102 angeordneten Verstärker 105 von variabler Verstärkung verstärkt und über die gemeinsame Übertragungsleitung 103 an die Steuer- und Signalverarbeitungseinheit 101 weitergeleitet. Wie in Figur 1 angedeutet, ist die Übertragungsleitung 103 in dieser Ausführungsform als Zweidrahtleitung mit zwei Drähten 106, 107 ausgeführt, wobei ein Draht 106 zur Übertragung dies verstärkten Empfangssignals dient. In der vorliegenden Anmeldung werden die Begriffe "Leitung" und "Draht" je nach Zusammenhang auch synonym verwendet, wenn nicht explizit darauf hingewiesen wird, dass die Leitung mehrere, beispielsweise zwei, voneinander separierte Drähte aufweist. Der Fachmann erkennt leicht, dass die Erfindung nicht auf Zweidrahtleitungen beschränkt ist.

Zur Übertragung der mittels der Signalaufnahmeeinheit 104 erfassten Empfangssignale über die Übertragungsleitung 103 werden die Empfangssignale in dem Sensor 102 zunächst moduliert, d.h. als höherfrequente Signale in die gemeinsame Übertragungsleitung 103 aufmoduliert. In der Ausführungsform gemäß Figur 1 weist der Sensor 102 dazu einen Hochpass 109 sowie eine erste Addierstelle 110 auf. In der Steuer- und Signalaufnahmeeinheit 101 werden diese höherfrequenten Signale dann von einer Signalauswertung 108 ausgewertet, wobei der Signalauswertung 108 gemäß dieser bevorzugten Ausführungsform ein Hochpass 111 vorgeschaltet ist. In diesem Zusammenhang wird auf die veranschaulichenden Pfeile, welche in der Figur 1 die Übertragungsrichtung kennzeichnen, hingewiesen. Wie in Figur 1 ferner gezeigt, werden Hochpasselemente dazu verwendet, um Empfangssignale des Sensors 102 in Richtung an die Signalauswertung 108 in der Steuer- und Signalauswerteeinheit 101 zu übermitteln.

In der Gegenrichtung wird von der Steuer- und Signalauswerteeinheit 101 die variable Verstärkung des im Sensor 102 angeordneten Verstärkers 105 auf ein gewünschtes Niveau eingestellt. Dies geschieht bevorzugt mittels eines im Verhältnis zu den Empfangssignalen niederfrequenten Signals. Dazu gibt in der Steuer- und Signalauswerteeinheit 101 eine Verstärkungssteuerung 112 ein im optionalen Tiefpass 113 gefiltertes Signal an eine zweite Addierstelle 114 aus. Im abgesetzten Sensor 102 wird dieses Signal via erste Addierstelle 110 und mittels eines Tiefpassfilters 115 herausgefiltert und an den Verstärker 105 gegeben. Ferner ist gemäß einer Variante der ersten Ausführungsform in der Steuer- und Signalauswerteeinheit 101 eine Regelung 116 angeordnet, mittels der zur Kompensierung von durch Objektdistanz und Signallaufzeit bedingten Empfangssignalabschwächungen die Stärke der verstärkten Empfangssignale über die Verstärkereinstellung, welche als eine Stellgröße dient, geregelt wird.

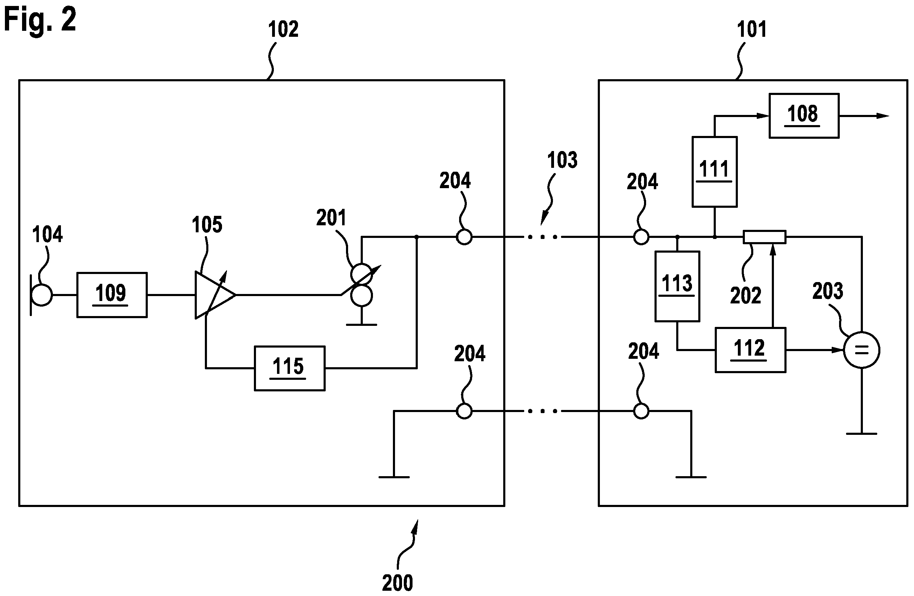

Figur 2 zeigt eine zweite bevorzugte Ausführungsform der Erfindung, wobei hier die Arbeitsweise der Erfindung im Vergleich zu Figur 1 beispielhaft auf noch konkretere Weise erläutert werden soll. Die mittels der Signalaufnahmeeinheit 104 aufgenommenen Empfangssignale werden zuerst einer Hochpassfilterung 109 unterzogen, bevor der in der Verstärkung einstellbare Verstärker 105 mit einer an der Übertragungsleitung 103 angeschlossenen einstellbaren Stromquelle 201 dieses Empfangssignal hochfrequent zur Steuer- und Signalverarbeitungseinheit 101 überträgt. Gemäß einer Variante dieser Ausführungsform der Erfindung ist die dazu verwendete Übertragungsleitung 103 auch die Versorgungsleitung des Sensors 102. Die Erfindung ist aber nicht auf eine derartige Zuordnung von Übertragungsleitungen beschränkt, sondern wird je nach Anwendungsfall gegebenenfalls entsprechend angepasst. In Figur 2 sind auch die Anschlüsse 204 der Übertragungsleitung eingezeichnet. Weiterhin kann das Empfangssignal in der Steuer- und Signalverarbeitungseinheit via Hochpassfilter 111 herausgefiltert und anschließend der Signalauswertung 108 bereitgestellt werden. Die Steuer und Signalverarbeitungseinheit 101 weist ferner eine Spannungsquelle 203 und einen Widerstand 202 auf, so dass gemäß der hier gezeigten beispielhaften Lösung von der Steuer- und Signalverarbeitungseinheit 101 durch Variation einer in die Übertragungsleitung 103 via Widerstand 202 eingekoppelten Spannung und/oder durch Variation des Widerstands 202 die Verstärkung des Verstärkers 105 im abgesetzten Sensor 102 beeinflusst werden kann. Bevorzugt wird zu diesem Zweck im abgesetzten Sensor 102 das sich langsam verändernde Signal zur Verstärkungseinstellung mittels Tiefpass 115 herausgefiltert. Der Tiefpass 113 in der Steuer- und Signalverarbeitungseinheit 101 dienst insbesondere zur Kontrolle der von der Verstärkungssteuerung 112 eingestellten Spannung.

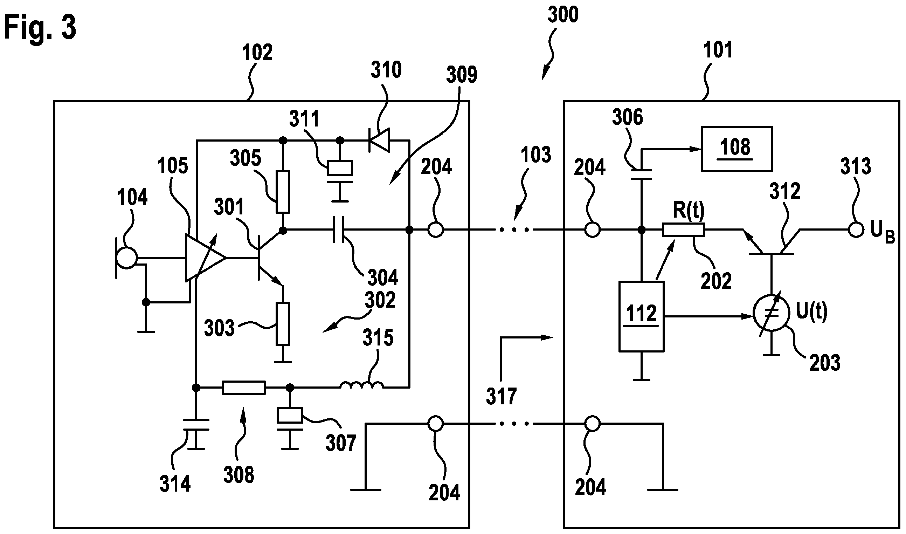

Figur 3 zeigt eine noch konkreter angegebene Lösung gemäß einer dritten Ausführungsform der Erfindung. Zwar ist in der hier gezeigten Schaltungsskizze 300 eine Hochpassfilterung zwischen der Signalaufnahmeeinheit 104 und dem Verstärker 105 nicht explizit eingezeichnet, jedoch ist eine solche in der Schaltungspraxis gebräuchlich. Das mit veränderlicher Verstärkung verstärkte Spannungssignal liegt an der Basis eines Transistors 301 im Sensor 102 an. Der im Emitterkreis 302 des Transistors 301 befindliche Widerstand 303 bestimmt den in die Übertragungsleitung 103 via Kondensator 304 eingekoppelten höherfrequenten Strom.

Der Gleichspannungsarbeitspunkt des Transistors 301 wird durch einen Kollektorwiderstand 305 bestimmt. Weiterhin weist der Kollektorkreis 309 des Transistors 301 die Diode 310 sowie einen an Masse gekoppelten Kondensator 311 auf, mit dem die Spannungsversorgung des Sensors 102 sichergestellt wird. Der Kollektorwiderstand 305 ist erheblich größer als der hochfrequente Innenwiderstand von Kondensator 304 sowie als der hochfrequente Innenwiderstand 317 der Steuer- und Signalverarbeitungseinheit 101. In der Steuer- und Signalverarbeitungseinheit 101 wird dieser höherfrequente Strom mittels des Kondensators 306 ausgekoppelt bzw. als Spannungssignal abgehört, wenn der hochfrequente Innenwiderstand 317 der Steuer- und Signalverarbeitungseinheit 101 im Wesentlichen durch den dargestellten regelbaren Widerstand R(t) bestimmt wird. In der in Figur 3 gezeigten Ausführungsform ist die regelbare Spannungsquelle an die Basis des Transistors 312 angeschlossen, der über seinen Kollektoranschluss 313 mit der Betriebsspannung U_{B} versorgt wird.

Gemäß Figur 3 ist die Spannungsquelle 203 als regelbare Spannungsquelle ausgebildet. Durch den Zeitverlauf von U(t) und optional durch den Zeitverlauf von R(t) wird maßgeblich via der Übertragungsleitung 103 bestimmt, wie sich der Zeitverlauf der Spannung am zur Verstärkungseinstellung im Sensor 102 befindlichen Elektrolytkondensator 307, dem eine Spule 315 vorgeschaltet ist, entwickelt. Beispielsweise ist bei einer Anwendung der Erfindung die Spannung zu Beginn der Verstärkung eines Echozyklus niedrig. Bevorzugt durch sprunghaftes Erhöhen der Spannung U(t) steigt jedoch die Spannung am Elektrolytkondensator 307 an. Der Anstieg wird unter anderem durch den Widerstand 308 und dem Kondensator 314 bestimmt. Der Verlauf der Spannung kann in der Steuer- und Signalverarbeitungseinheit 101 von der Verstärkersteuerung 112 an der Versorgungsleitung 103 abgegriffen werden. Somit kann leicht eine Regelung des Verstärkungsverlaufs erreicht werden. Wenn nun die die Verstärkung bestimmende Spannung am Kondensator 307 nicht wie erwartet verläuft bzw. eine Regelungsabweichung festgestellt wird, kann entweder unmittelbar im laufenden Echozyklus oder spätestens im nachfolgenden Echozyklus durch entsprechende Variation von U(t) und/oder von R(t) der Verlauf der die Verstärkung bestimmende Spannung beeinflusst werden.

Der Fachmann erkennt, dass die Erfindung nicht auf die in dieser Anmeldung diskutierten Ausführungsformen und Weiterbildungen und die hierzu explizit genannten Kombinationen beschränkt ist. Vielmehr wird der Fachmann die Erfindung je nach Anwendungsfall modifizieren und geeignet kombinieren, ohne dabei den Schutzbereich der unabhängigen Ansprüche zu verlassen.

Neben der schriftlichen Offenbarung der Erfindung wird hiermit explizit auf deren zeichnerische Darstellung in den Fig. 1 bis 3 verwiesen.

## Patentansprüche

1. Vorrichtung (100) zur Erfassung von analogen Signalen zur Durchführung einer Umfelderfassung, aufweisend:
- eine Steuer- und Signalauswerteeinheit (101),
- zumindest einen Sensor (102) mit einer Signalaufnahmeeinheit (104) zur Erfassung von Empfangssignalen, wobei der Sensor (102) über eine oder mehrere Übertragungsleitungen (103, 106, 107) mit der Steuer- und Signalauswerteeinheit (101) verbunden ist und die Übertragungsleitung (103) oder eine der Übertragungsleitungen (103) als Leitungsdraht zum zeitgleichen bidirektionalen Übertragung von Signalen ausgebildet ist,
**dadurch gekennzeichnet, dass**
- die Vorrichtung einen in seiner Verstärkung veränderbaren Verstärker (105) zur Verstärkung der Empfangssignale aufweist und dazu ausgebildet ist, eine Übertragung der mittels des Verstärkers (105) verstärkten Empfangssignale über die gleiche Übertragungsleitung (103) durchzuführen, über die zeitgleich auch eine Information zur Einstellung der Verstärkung übertragen wird, wobei zur Übertragung der mittels des Verstärkers (105) verstärkten Empfangssignale der Sensor (102) einen mit dem Verstärker (105) gekoppelten ersten Hochpassfilter (109) und eine Addierstelle (110) und die Steuer- und Signalauswerteeinheit (101) einen mit einer Signalauswertung (108) der Steuer- und Signalauswerteeinheit (101) gekoppelten zweiten Hochpassfilter (111) aufweist und wobei zur Übertragung der Information zur Einstellung der Verstärkung die Steuer- und Signalauswerteeinheit (101) einen mit einer Verstärkungssteuerung (112) der Steuer- und Signalauswerteeinheit (101) gekoppelten ersten Tiefpassfilter (113) und eine Addierstelle (114) und der Sensor (102) einen mit einem Eingang des Verstärkers (105) gekoppelten zweiten Tiefpassfilter aufweist.

2. Vorrichtung nach Anspruch 1, wobei die Vorrichtung dazu ausgebildet ist, auch eine Übertragung der Versorgungsspannung des Sensors (102) über die gleiche Übertragungsleitung (103) durchzuführen, über die zeitgleich die mittels des Verstärkers (105) verstärkten Empfangssignale und die Information zur Einstellung der Verstärkung übertragen wird.

3. Vorrichtung (100) nach Anspruch 1 oder 2, die ferner dazu ausgebildet ist, die Einstellung der Verstärkung derart zu steuern, dass die Empfangssignale von der Laufzeit eines Echosignals abhängig verstärkt werden.

4. Vorrichtung (100) nach einem der vorhergehenden Ansprüche, wobei die Steuer und Signalauswerteeinheit (101) neben der Verstärkungssteuerung (112) und der Signalauswertung (108) Regelungsmittel (116) zur Ansteuerung der Verstärkungssteuerung (112) in Antwort auf Ausgangssignale der Signalauswertung (108) aufweist.

5. Vorrichtung (100) nach einem der vorhergehenden Ansprüche, **dadurch gekennzeichnet, dass** der Sensor (102) eine steuerbare Stromquelle (201) aufweist, mittels der das mit variabler Verstärkung durch den Verstärker (105) verstärkte Empfangssignal als Stromsignal in die Übertragungsleitung (103) eingekoppelt werden kann, oder dass der Sensor (102) eine steuerbare Spannungsquelle aufweist, mittels der das mit variabler Verstärkung durch den Verstärker (105) verstärke Empfangssignals als Spannungssignal in die Übertragungsleitung (103) eingekoppelt werden kann.

6. Vorrichtung (100) nach einem der vorhergehenden Ansprüche, **dadurch gekennzeichnet, dass** die Steuer- und Signalauswerteeinheit (101) eine steuerbare Stromquelle aufweist, mittels der das Signal zur Steuerung der einstellbaren Verstärkung im Sensor (102) als Stromsignal in die Übertragungsleitung (103) eingekoppelt werden kann, oder dass die Steuer- und Signalauswerteeinheit (101) eine steuerbare Spannungsquelle (203) aufweist, mittels der das Signal zur Steuerung der einstellbaren Verstärkung im Sensor (102) als Spannungssignal in die Übertragungsleitung (103) eingekoppelt werden kann.

7. Vorrichtung nach einem der vorhergehenden Ansprüche, wobei das von der Steuer- und Signalauswerteeinheit (101) in die Übertragungsleitung (103) eingekoppelte Signal zur Steuerung der einstellbaren Verstärkung mittels auf den Sensor (102) und Steuer- und Signalauswerteeinheit (101) verteilter Glieder generiert wird.

8. Vorrichtung nach Anspruch 7, wobei die auf den Sensor (102) und die Steuer und Signalauswerteeinheit (101) verteilten Glieder einen einstellbaren Widerstand (202) und/oder eine steuerbare Spannungsquelle (203), die in der Steuer- und Signalauswerteeinheit angeordnet sind, sowie einen Kondensator (307), der im Sensor angeordnet ist, aufweisen, so dass die Vorrichtung ausgebildet ist, das Signal zur Steuerung der einstellbaren Verstärkung durch Wahl des Widerstandswertes bzw. dessen Zeitverlaufs R(t) und/oder durch Vorgabe einer Spannung bzw. eines Spannungsverlaufs U(t) in der Steuer- und Signalauswerteeinheit (101) sowie durch den Kondensator (307) im Sensor (102) zu generieren.

9. Vorrichtung nach einem der vorhergehenden Ansprüche, wobei der Sensor (102) einen Speicher zum Speichern des Zeitverlaufs der einstellbaren Verstärkung im Sensor (102) aufweist.

10. Vorrichtung nach einem der vorhergehenden Ansprüche, wobei der Sensor (102) einen Ultraschallwandler aufweist.

11. Vorrichtung nach einem der vorhergehenden Ansprüche, bei der eine oder mehrere der Signal- und Steuerungseinheiten (101) jeweils mit mehreren Sensoren (102) gemäß einem der vorhergehenden Ansprüche verbunden sind und mindestens einer der mehreren Sensoren (102) Mittel zur Durchführung einer quasianalogen Übertragung der in dem Sensor (102) detektierten Empfangssignale an die Signal- und Steuerungseinheit (101) aufweist.

12. Verfahren zum Betrieb einer Vorrichtung gemäß einer der vorhergehenden Ansprüche, **dadurch gekennzeichnet, dass** vom Verstärker (105) verstärkte Signale mittels Hochpass (109) und Addierstelle (110) im Sensor (102) auf die Übertragungsleitung (103) eingeprägt werden und in der Steuer- und Signalauswerteeinheit (101) mittels Hochpass (111) ausgekoppelt werden und dass die Information zur Verstärkungseinstellung in der Steuer- und Signalauswerteeinheit (101) mittels Tiefpass (113) und Addierstelle (114) in die Übertragungsleitung (103) eingeprägt und in dem zumindest einen Sensor (102) über Tiefpassfilter (113) ausgekoppelt wird.

13. Verfahren nach Anspruch 12, **dadurch gekennzeichnet, dass** Steuerpulse über die Übertragungsleitung (103) an den Sensor (102) übertragen werden zum Starten eines Ablaufs der einstellbaren Verstärkung gemäß einem im Sensor (102) gespeicherten Zeitverlauf.

14. Verfahren nach einem der Ansprüche 12 oder 13, wobei die einstellbare Verstärkung sprunghaft verändert wird.

15. Verfahren nach einem der Ansprüche 12 bis 14, wobei im Sensor (102) eine Amplitudendigitalisierung und/oder Frequenzanalyse und/oder Periodenanalyse durchgeführt wird, und die sich daraus ergebenden Daten auf eine quasianaloge Weise über einen die Verbindungsleitung aufweisenden bidirektionalen analogen Kanal zur Steuer- und Signalauswerteeinheit übertragen werden.

16. Bewegungshilfsmittel, insbesondere ein Kraftfahrzeug, ausgestattet mit einer Vorrichtung nach einem der Ansprüche 1 bis 11.

## Claims

1. Apparatus (100) for detecting analogue signals for carrying out environmental detection, having:
- a control and signal evaluation unit (101),
- at least one sensor (102) having a signal recording unit (104) for detecting reception signals, the sensor (102) being connected to the control and signal evaluation unit (101) via one or more transmission lines (103, 106, 107), and the transmission line (103) or one of the transmission lines (103) being in the form of a line wire for simultaneously bidirectionally transmitting signals,
**characterized in that**
- the apparatus has an amplifier (105), the gain of which can be changed and which is intended to amplify the reception signals, and is designed to transmit the reception signals amplified by means of the amplifier (105) via the same transmission line (103) via which an item of information for adjusting the gain is also transmitted at the same time, wherein, in order to transmit the reception signals amplified by means of the amplifier (105), the sensor (102) has a first high-pass filter (109) coupled to the amplifier (105) and an adding point (110) and the control and signal evaluation unit (101) has a second high-pass filter (111) coupled to a signal evaluation means (108) of the control and signal evaluation unit (101), and wherein, in order to transmit the information for adjusting the gain, the control and signal evaluation unit (101) has a first low-pass filter (113) coupled to a gain controller (112) of the control and signal evaluation unit (101) and an adding point (114) and the sensor (102) has a second low-pass filter coupled to an input of the amplifier (105).

2. Apparatus according to Claim 1, the apparatus also being designed to transmit the supply voltage of the sensor (102) via the same transmission line (103) via which the reception signals amplified by means of the amplifier (105) and the information for adjusting the gain are transmitted at the same time.

3. Apparatus (100) according to Claim 1 or 2, which is also designed to control the adjustment of the gain in such a manner that the reception signals are amplified on the basis of the propagation time of an echo signal.

4. Apparatus (100) according to one of the preceding claims, the control and signal evaluation unit (101) having, in addition to the gain controller (112) and the signal evaluation means (108), regulating means (116) for controlling the gain controller (112) in response to output signals from the signal evaluation means (108).

5. Apparatus (100) according to one of the preceding claims, **characterized in that** the sensor (102) has a controllable current source (201) which can be used to inject the reception signal amplified with a variable gain by the amplifier (105) into the transmission line (103) as a current signal, or **in that** the sensor (102) has a controllable voltage source which can be used to inject the reception signal amplified with a variable gain by the amplifier (105) into the transmission line (103) as a voltage signal.

6. Apparatus (100) according to one of the preceding claims, **characterized in that** the control and signal evaluation unit (101) has a controllable current source which can be used to inject the signal for controlling the adjustable gain in the sensor (102) into the transmission line (103) as a current signal, or **in that** the control and signal evaluation unit (101) has a controllable voltage source (203) which can be used to inject the signal for controlling the adjustable gain in the sensor (102) into the transmission line (103) as a voltage signal.

7. Apparatus according to one of the preceding claims, the signal for controlling the adjustable gain which is injected into the transmission line (103) by the control and signal evaluation unit (101) being generated by means of elements distributed among the sensor (102) and the control and signal evaluation unit (101).

8. Apparatus according to Claim 7, the elements distributed among the sensor (102) and the control and signal evaluation unit (101) having a variable resistor (202) and/or a controllable voltage source (203), which is/are arranged in the control and signal evaluation unit, and a capacitor (307) which is arranged in the sensor, with the result that the apparatus is designed to generate the signal for controlling the adjustable gain by selecting the resistance value or its time profile R(t) and/or by specifying a voltage or a voltage profile U(t) in the control and signal evaluation unit (101) and by means of the capacitor (307) in the sensor (102).

9. Apparatus according to one of the preceding claims, the sensor (102) having a memory for storing the time profile of the adjustable gain in the sensor (102).

10. Apparatus according to one of the preceding claims, the sensor (102) having an ultrasonic transducer.

11. Apparatus according to one of the preceding claims, in which one or more of the signal and control units (101) are each connected to a plurality of sensors (102) according to one of the preceding claims, and at least one of the plurality of sensors (102) has means for carrying out quasi-analogue transmission of the reception signals detected in the sensor (102) to the signal and control unit (101).

12. Method for operating an apparatus according to one of the preceding claims, **characterized in that** signals amplified by the amplifier (105) are impressed onto the transmission line (103) by means of the high-pass filter (109) and adding point (110) in the sensor (102) and are coupled out in the control and signal evaluation unit (101) by means of the high-pass filter (111), and **in that** the information for adjusting the gain is impressed into the transmission line (103) by means of the low-pass filter (113) and adding point (114) in the control and signal evaluation unit (101) and is coupled out in the at least one sensor (102) via the low-pass filter (113).

13. Method according to Claim 12, **characterized in that** control pulses are transmitted to the sensor (102) via the transmission line (103) in order to start a sequence of the adjustable gain according to a time profile stored in the sensor (102).

14. Method according to either of Claims 12 and 13, the adjustable gain being changed suddenly.

15. Method according to one of Claims 12 to 14, an amplitude digitization and/or a frequency analysis and/or a period analysis being carried out in the sensor (102) and the resulting data being transmitted to the control and signal evaluation unit in a quasi-analogue manner via a bidirectional analogue channel having the connecting line.

16. Movement aid, in particular a motor vehicle, equipped with an apparatus according to one of Claims 1 to 11.

## Revendications

1. Dispositif (100) de détection de signaux d'analogiques pour effectuer la détection d'un environnement, comportant :
- une unité de commande et d'analyse de signaux (101),
- au moins un capteur (102) pourvu d'une unité d'acquisition de signaux (104) pour la détecte de signaux de réception, dans lequel le capteur (102) est connecté par l'intermédiaire d'une ou plusieurs lignes de transmission (103, 106, 107) à l'unité de commande et d'analyse (101) et la ligne de transmission (103) ou l'une des lignes de transmission (103) est réalisée sous la forme d'un fil conducteur permettant une transmission bidimensionnelle simultanée de signaux,
**caractérisé en ce que**
- le dispositif comporte un amplificateur (105) permettant une amplification variable pour l'amplification des signaux de réception et est conçu pour effectuer une transmission des signaux de réception amplifiés au moyen de l'amplificateur (105) par l'intermédiaire d'une ligne de transmission (103) identique à celle par l'intermédiaire de laquelle une information destinée à régler l'amplification est également transmise simultanément, dans lequel le capteur (102) comporte, pour la transmission des signaux de réception amplifiés par l'amplificateur (105) un premier filtre passe-haut (109) couplé à l'amplificateur (105) et un point d'addition (110), et l'unité de commande et d'analyse de signaux (101) comporte un deuxième filtre passe-haut (111) couplé à un dispositif d'analyse de signaux (108) de l'unité de commande et d'analyse de signaux (101), et dans lequel l'unité de commande et d'analyse de signaux (101) comporte, pour la transmission de l'information destinée à régler l'amplification, un premier filtre passe-bas (113) et un point d'addition (114) couplés à un dispositif de commande d'amplification (112) de l'unité de commande et d'analyse de signaux (101), et le capteur (102) comporte un deuxième filtre passe-bas couplé à une entrée de l'amplificateur (105).

2. Dispositif selon la revendication 1, dans lequel le dispositif est également conçu pour effectuer la transmission de la tension d'alimentation du capteur (102) par l'intermédiaire d'une ligne de transmission (103) identique à celle par l'intermédiaire de laquelle les signaux de réception amplifiés au moyen de l'amplificateur (105) et l'information destinée à régler l'amplification sont simultanément transmis.

3. Dispositif (100) selon la revendication 1 ou 2, conçu pour en outre commander le réglage de l'amplification de manière à ce que les signaux de réception soient amplifiés en fonction du temps de propagation d'un signal d'écho.

4. Dispositif (100) selon l'une quelconque des revendications précédentes, dans lequel l'unité de commande et d'évaluation de signaux (101) comporte, outre le dispositif de commande d'amplification (112) et le dispositif d'évaluation de signaux (108), des moyens de régulation (116) destinés à commander le dispositif de commande d'amplification (112) en réponse à des signaux de sortie du dispositif d'évaluation de signaux (108).

5. Dispositif (100) selon l'une quelconque des revendications précédentes, **caractérisé en ce que** le capteur (102) comporte une source de courant pouvant être commandée (201), au moyen de laquelle le signal de réception amplifié avec une amplification variable par l'amplificateur (105) peut être injecté en tant que signal de courant dans la ligne de transmission (103) ou **en ce que** le capteur (102) comporte une source de tension pouvant être commandée, au moyen de laquelle le signal de réception amplifié avec une amplification variable par l'amplificateur (105) peut être injecté en tant que signal de tension dans la ligne de transmission (103).

6. Dispositif (100) selon l'une quelconque des revendications précédentes, **caractérisé en ce que** l'unité de commande et d'évaluation de signaux (101) comporte une source de courant pouvant être commandée, au moyen de laquelle le signal destiné à commander l'amplification réglable dans le capteur (102) peut être injecté en tant que signal de courant dans la ligne de transmission (103), ou **en ce que** l'unité de commande et d'analyse de signaux (101) comporte une source de tension pouvant être commandée (203), au moyen de laquelle le signal destiné à commander l'amplification réglable dans le capteur (102) peut être injecté en tant que signal de tension dans la ligne de transmission (103).

7. Dispositif selon l'une quelconque des revendications précédentes, dans lequel le signal injecté par l'unité de commande et d'analyse de signaux (101) dans la ligne de transmission (103) pour commander l'amplification variable est générée au moyen d'éléments répartis sur le capteur (102) et l'unité de commande et d'analyse de signaux (101).

8. Dispositif selon la revendication 7, dans lequel les éléments répartis sur le capteur (102) et l'unité de commande et d'analyse de signaux (101) comportent une résistance réglable (202) et/ou une source de tension pouvant être commandée (203), qui sont disposées dans l'unité de commande et d'analyse de signaux, ainsi qu'un condensateur (307) qui est disposé dans le capteur, de telle sorte que le dispositif est conçu pour générer le signal destiné à commander l'amplification réglable par sélection de la valeur de résistance ou de sa courbe temporelle R(t) et/ou par prédéfinition d'une tension ou d'une courbe de tension U(t) dans l'unité de commande et d'analyse de signaux (101) ainsi que par l'intermédiaire du condensateur (307) du capteur (102).

9. Dispositif selon l'une quelconque des revendications précédentes, dans lequel le capteur (102) comporte une mémoire destinée à stocker la courbe temporelle de l'amplification réglable dans le capteur (102).

10. Dispositif selon l'une quelconque des revendications précédentes, dans lequel le capteur (102) comporte un transducteur à ultrasons.

11. Dispositif selon l'une quelconque des revendications précédentes, dans lequel une ou plusieurs des unités de signal et de commande (101) sont respectivement connectées à plusieurs capteurs (102) selon l'une quelconque des revendications précédentes et au moins l'un des multiples capteurs (102) comporte des moyens destinés à effectuer une transmission quasi-analogique des signaux de réception détectés dans le capteur (102) à l'unité de signal et de commande (101).

12. Procédé de misee en fonctionnement d'un dispositif selon l'une quelconque des revendications précédentes, **caractérisé en ce que** des signaux amplifiés par l'amplificateur (105) sont appliqués à la ligne de transmission (103) au moyen d'un filtre passe-haut (109) et de points d'addition (110) dans le capteur (102) et sont couplés en sortie au moyen d'un filtre passe-haut (111) dans l'unité de commande et d'évaluation de signaux (101) et **en ce que** l'information destinée au réglage de l'amplification est appliquée dans l'unité de commande et d'analyse de signaux (101) au moyen d'un filtre passe-bas (113) et de points d'addition (114) dans la ligne de transmission (103) et sont couplés en sortie dans l'au moins un capteur (102) par l'intermédiaire du filtre passe-bas (113).

13. Procédé selon la revendication 12, **caractérisé en ce que** des impulsions de commande sont transmises par l'intermédiaire de la ligne de transmission (103) au capteur (102) pour déclencher une évolution de l'amplification réglable conforme à une courbe temporelle stockée dans le capteur (102).

14. Procédé selon l'une quelconque des revendications 12 ou 13, dans lequel l'amplification variable est modifié par sauts.

15. Procédé selon l'une quelconque des revendications 12 à 14, dans lequel une numérisation d'amplitude et/ou une analyse de fréquence et/ou une analyse de période est effectuée dans le capteur (102) et les données qui en résultent sont transmises de manière quasi-analogique par l'intermédiaire d'un canal analogique bidirectionnel comportant la ligne de connexion à l'unité de commande et d'analyse de signaux.

16. Moyen d'aide au déplacement, notamment véhicule automobile, muni d'un dispositif selon l'une quelconque des revendications 1 à 11.
